Europäisches Patentamt

European Patent Office

Office européen des brevets

(19)

(11) Publication number: **0 146 336**
**A2**

## (12) EUROPEAN PATENT APPLICATION

(21) Application number: **84308628.1**

(22) Date of filing: **12.12.84**

(51) Int. Cl.⁴: **B 63 C 11/34**, F 16 L 37/08, F 16 G 11/10

(30) Priority: **16.12.83 GB 8333663**
**04.07.84 GB 8416999**

(43) Date of publication of application: **26.06.85**
**Bulletin 85/26**

(84) Designated Contracting States: **BE DE FR GB NL SE**

(71) Applicant: **Hogg, George Alexander, 3 St. John's Terrace Mannofield, Aberdeen AB1 7PL Scotland (GB)**

(72) Inventor: **Hogg, George Alexander, 3 St. John's Terrace Mannofield, Aberdeen AB1 7PL Scotland (GB)**

(74) Representative: **Pattullo, Norman et al, Ian G. Murgitroyd and Company 49 Bath Street, Glasgow G2 2DL Scotland (GB)**

(54) **Stab connector assembly.**

(57) A stab connector assembly having a stab member and a socket member each having locking formations which are engageable to prevent withdrawal of the stab member for the socket member. The locking formations include collet fingers secured at one end and deflectable about that end to allow passage of the fingers past the relevant locking formation on insertion of the stab member into the socket member and thereafter to engage the locking formation to prevent withdrawal. The stab member may have a central mandrel on which the collet fingers are slidable, the free end of the collet fingers being trapped in use between the mandrel and the socket member.

## Stab Connector Assembly

This invention relates to a stab connector assembly.

In many environments it is very useful to provide couplings or connections which can be quickly and easily engaged, and one such environment is in offshore oilfields. From time to time crises have occurred when, for example, a diving bell has become detached from its suspension cable underwater and has sunk to the sea bed. The ambient temperatures at depth are so low that it is very important that hot water be pumped continuously to the bell and that gas for providing a breathable atmosphere be supplied. On severing of the suspension cable, however, damage can also be done to the umbilical supply lines so that hot water and gas are not supplied; without them the occupants of a stranded bell cannot survive for long.

In some cases assistance has been on hand but difficulty in manipulating the connections of the umbilical to the bell have meant that reconnection to a new supply from the surface has not been possible. Further, connection of lifting cables to the bell can be awkward at such depths, and precious time can be lost in securing them.

According to the present invention there is provided a stab connector assembly comprising a socket member having a first locking formation on its side wall, and a stab member for penetrating the socket member and having a second locking formation engageable with the first locking formation to resist withdrawal of the stab member from the socket member, the first or second locking formation being provided on at least one collet finger secured at one end portion and deflectable about that end portion so that the locking formation on the collet finger can be moved between a first position in which it can pass the other locking formation on penetration of the stab member into the socket member and a second position in which it extends radially to engage the other locking formation.

A number of collet fingers are preferably provided around the stab member to provide the second locking formation and to be engageable with a shoulder formed around the inside wall of the socket member, the shoulder providing the first locking formation.

The collet fingers preferably are deflectable by means of the resilience of the material of which they are made, so that they can be rigidly fixed at one end without any movable joints being used.

The stab member may have a central mandrel and the collet finger or fingers may extend along the mandrel and be movable, for example slidable, longitudinally of it. The mandrel may have a shoulder which is engageable with a corresponding face on the free end portion of the collet finger in a manner whereby a force applied in use to the mandrel in a direction tending to retract it from the socket member causes the free end portion of the collet finger to be wedged or otherwise trapped between the mandrel shoulder and the first locking formation on the socket member. The free end portion of the collet finger is then subject to compression between the mandrel and first locking formation.

Preferably the free end portion of the collet finger has a rearwardly-directed face for engagement with a corresponding forwardly-directed face on the socket member, said forwardly-directed face forming the first locking formation, said rearwardly-directed face on the collet finger being disposed at an angle of from 10 degrees to 60 degrees to the direction of insertion of the stab member into the socket member.

The stab member may have one or more through bores or electrical conductors for communication with corresponding apertures or conductors in the socket member so that fluid can be passed from the stab member to the socket member.

Generally the collet finger will be provided on the side wall of the stab member, but in some cases the collet finger may be on the inside wall of the socket member.

The stab member for use in the assembly of the invention may comprise an elongate member having a collet finger on its side wall, the collet finger being held on the elongate member at one end portion and having at its free end portion a locking formation directed for preventing retraction of the elongate member from a socket member, the collet finger being deflectable at its free end radially of the elongate member.

In some cases it is useful for the stab member to be releasable from the socket, for example if the assembly, or at least the stab member, is to be re-used. In this case the collet finger may have a length greater than the distance from the first locking formation of the socket member to the mouth of the socket, so that when the stab member is engaged within the socket the collet finger is accessible from outside the socket member. The collet finger may have a shoulder at its secured end portion outside the socket member so that a force may be exerted on it to move it relative to the mandrel and thereby allow it to disengage from the mandrel and move to a reduced-diameter portion of the mandrel where it can deflect and allow the mandrel to be retracted from the socket.

Embodiments of the present invention will now be described by way of example with reference to the accompanying drawings, in which:

Fig. 1 is a side sectional view of a stab connector assembly of the present invention;
Fig. 2 is a side sectional view of a further stab connector assembly of the invention;
Fig. 3 is a side sectional view of a still further stab connector assembly of the invention;
Figs. 4 and 5 are sections through part of the assemblies of Figs. 1 and 2 respectively; and
Fig. 6 is a side sectional view of an alternative form of a stab connector assembly of the invetion which is releasable.

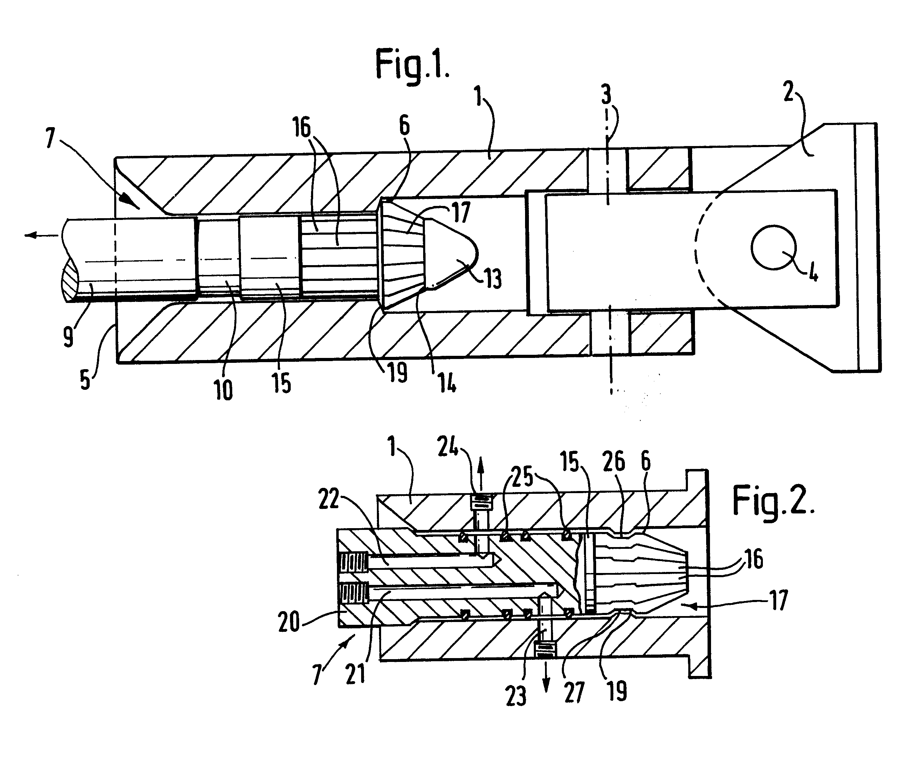

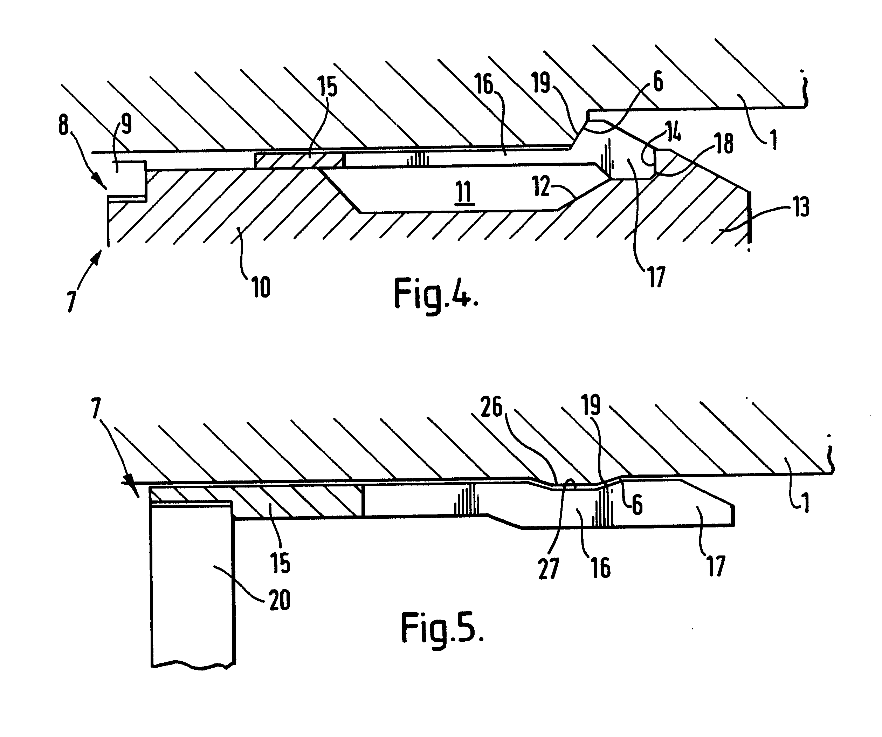

Referring first to Figs. 1 and 4, the stab connector assembly of this embodiment of the invention has a socket member in the form of a steel tube 1 which is secured to a bracket 2 on a body such for example as a diving bell by means of a universal joint pivotal about axes 3 and 4. The tube 1 has an inwardly-chamfered outer end 5 and a shoulder 6 formed by a step in its inner wall.

A steel stab member 7 is connected by a screw thread coupling 8 to a wire lifting cable 9 capable of bearing the weight of the diving bell and extending from the surface of the water, and is in the form of a central mandrel 10 having an annular recess 11 which has an inclined forward wall 12. The mandrel terminates in a head portion 13 having a rearwardly-directed shoulder 14.

Around the mandrel 10 is located a steel sleeve 15 freely slidable longitudinally of the mandrel 10, the sleeve being slit from its forward end to form collet fingers 16 each terminating in a head 17 having a forwardly-directly abutment face 18 engageable with the shoulder 14 of the mandrel 10.  The head 17 has a rearwardly-directed abutment face 19 engageable with the shoulder 6 of the tube 1.

The collet fingers 16 are of selected thickness to allow them to be resiliently deflectable towards the axis of the mandrel 10 so that, when the head 17 is disposed at the recess 11 and pressed inwardly the fingers 16 deflect to allow the head 17 to enter the recess 11.

In use for connecting the lifting cable 9 to the diving bell, the stab member is pushed into the tube 1 whereby the heads 17 of the fingers 16 engage the chamfered end 5, causing the sleeve 15 to slide rearwardly along the mandrel 10 until the heads 17 are adjacent the recess 11.  The chamfer then pushes the heads 17 into the recess 11, deflecting the fingers 16, and allowing the stab member 7 to pass along the tube 1.

When the stab member has penetrated to an extent whereby the heads 17 pass the shoulder 6, the resilience of the collet

0146336

6

fingers 16 causes the heads 17 to deflect radially outwardly. The lifting cable 9 is then tensioned, retracting the mandrel 10 against the face 18 and the faces 19 against the shoulder 6. Thus the heads 17 are wedged securely between the shoulder 14 and the shoulder 6, and the lifting forces on the diving bell are transferred to the cable 9 via the tube 11, heads 17 and mandrel 10; the fingers 16 are not subject to the lifting forces.

Referring now to Figs. 2 and 5, the assembly is for connecting fluid pipelines from the surface of the water in a body such as a diving bell, rather than for use in lifting a bell as in Fig. 1. In this embodiment the shoulder 6 and faces 19 are less pronounced and provide a releasable connection for the stab member 7 to the tube 1. The collet fingers 16 extend from a sleeve 15 which is screwed directly to a supply line 20 having a through bore 21 for hot water and a through bore 22 for breathable diving gas. The tube 1 has corresponding bores 23, 24 respectively for feeding the fluids into the diving bell.

Fluid seals 25 are provided on the stab member 7 and no central mandrel is present as the connection does not need to be load-bearing; indeed, the bores 21 and 22 terminate radially of the stab member 7 so that the fluid flow does not produce a net force on the stab member into or out of the tube 1.

The tube 1 in this case has an annular projection 26 engaging with an annular recess 27 in the stab member 7 wall to locate the stab member precisely at the required location within the tube 1 to provide the fluid connection. The tube 1 is rigidly secured on the diving bell.

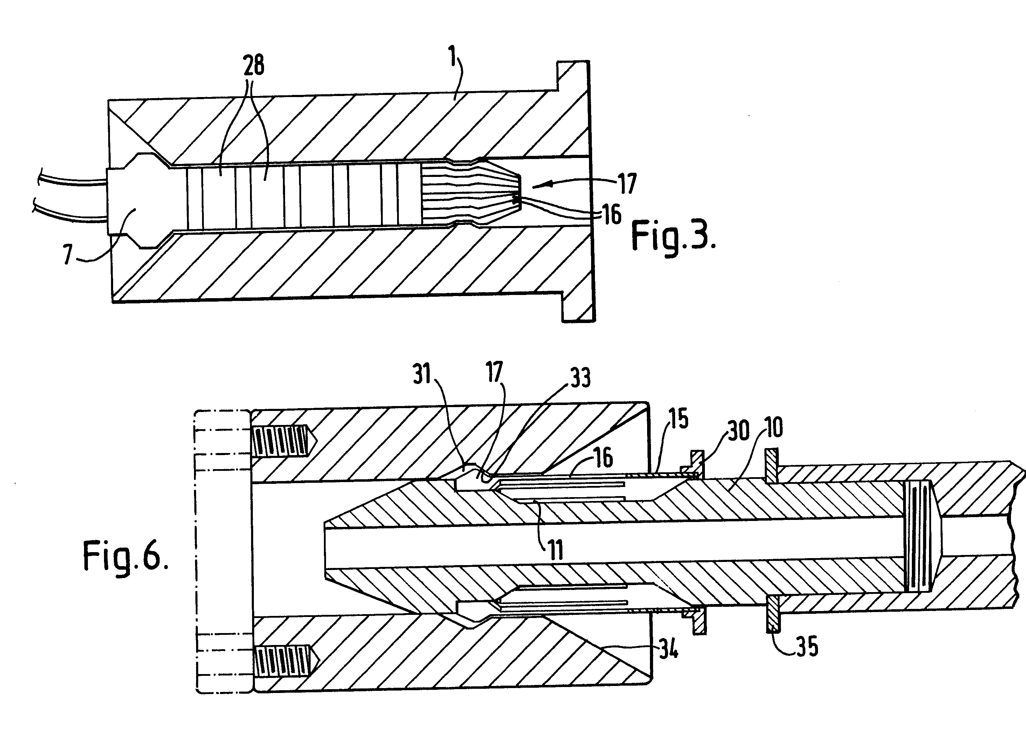

In Fig. 3 the assembly is similar to that of Fig. 2 but is for transferring electricity to a body such as a diving bell. The body of the stab member 7 has annular conductor bands 28 electrically connected to a power supply at the surface and corresponding with conductors (not shown) exposed at the inside wall of the tube 1.

The assemblies of these embodiments provide rapid and effective life-saving systems for a stranded diving bell or other underwater vehicle or structure. In the event of an accident, the stab members 7 of Figs. 2 and 3 can be easily attached by divers or remotely-operated vehicles to tubes 1 already provided on the bell, and hot water, breathable gas and electricity supplied from the surface. This provides the occupants of the bell with the capability of survival for a long period. The stab member 7 of Fig. 1 can then be connected to the tube 2 secured to the bell, and the bell lifted safely to the surface.

Referring now to Fig. 6, the sleeve 15 and collet fingers 16 extend from a ring 30 which is slidably mounted on the mandrel 10, and an annular recess 31 of the tube 1 engaging with the heads 17 of the collet fingers 16 is spaced from the tube's outer end by a distance less than the distance between the ring 30 and the heads 17. An annular shoulder 35 is rigidly fixed on the mandrel 10 rearwardly of the collet fingers 16.

In use, the connector of Fig. 6 can be engaged in similar manner to that of Figs. 1 and 4 with the heads 17 in the recess 31, but when in position the ring 30 is external of the tube 1, as shown. (It will be appreciated that the ring 30 could be disposed in the chamfered portion 34 of the tube 1, so long as it is accessible from outside the tube 1). If it is desired to break the connection and recover the mandrel 10, hydraulic jaws (not shown) are applied to the ring 30 and the shoulder 35 and actuated to force the ring 30 and shoulder 35 together.  This has the effect of forcing the mandrel 10 inwardly of the tube 1 while holding the ring 30, and hence the collet fingers 16, in position relative to the tube 1, until the heads 17 of the collet fingers 16 lie adjacent the recess 11.  The mandrel 10 is then withdrawn from the tube 1, forcing the heads 17 against the rearward face 33 of the recess 31, and this causes the heads to deflect into the recess 11, allowing the mandrel 10 with the deflected collet fingers 16 to be removed completely from the tube 1.

Further uses for the assembly of this invention include the provision of connections for ROV's to hold themselves on underwater structures and also to "plug in" to alternative selected cleaning, inspection, hydraulic fluid supply or other work packages for use on such structures.  For such purposes the assembly of Fig. 6 may be used, with the mandrel 10 being externally powered to engage or release the connection.

Modifications and improvements may be made without departing from the scope of the invention.

CLAIMS

1. A stab connector assembly comprising a socket member having a first locking formation on its side wall, and a stab member for penetrating the socket member and having a second locking formation engageable with the first locking formation to resist withdrawal of the stab member from the socket member, the first or second locking formation being provided on at least one collet finger secured at one end portion and deflectable about that end portion so that the locking formation on the collet finger can be moved between a first position in which it can pass the other locking formation on penetration of the stab member into the socket member and a second position in which it extends radially to engage the other locking formation.

2. An assembly according to Claim 1, wherein the stab member has a mandrel having a rearwardly-facing shoulder which is engageable with a corresponding forwardly-directed face on the free end portion of the collet finger whereby in use the application to the mandrel of a force tending to retract it from the socket member causes the free end portion of the collet finger to be trapped between the shoulder on the mandrel and the first locking formation on the socket member.

3. An assembly according to Claim 2, wherein the collet finger is mounted on the mandrel and is movable along the mandrel, and the mandrel has a reduced-diameter portion towards which the free end portion of the collet finger is deflectable.

4. An assembly according to Claim 3, wherein the collet finger has a length greater than the distance of the first locking formation from the entrance to the socket of the socket member, so that in use the collet finger is accessible from outside the socket member.

5. An assembly according to any one of Claims 2 to 4, wherein the free end portion of the collet finger has a rearwardly-directed face for engagement with a corresponding forwardly-directed face on the socket member, said forwardly-directed face forming the first locking formation, said rearwardly-directed face on the collet finger being disposed at an angle of from 10 degrees to 60 degrees to the direction of insertion of the stab member into the socket member.

6. An assembly according to any one of the preceding Claims, wherein the collet finger has a stem extending from the free end portion to the secured end portion, the stem being of smaller cross-sectional area than the free end portion.

7. An assembly according to Claim 6, wherein the collet finger is deflectable by virtue of the stem being resilient.

8. An assembly according to any one of the preceding Claims, wherein a plurality of collet fingers are provided around the periphery of the stab member, the collet fingers extending from a common secured end portion.

9. An assembly according to any one of the preceding Claims, wherein the stab member has an electrical or fluid connector which engages with a corresponding electrical or fluid connector on the socket member on insertion of the stab member into the socket member.

10. An assembly according to any one of the preceding Claims, wherein the socket member is provided on apparatus

for operating underwater.

Fig.1.

Fig.2.

0146336

28    1

7    17
16

Fig.3.

31    17    33
15    30    10
16

Fig.6.    11

34    35

0146336

Fig.4.

Fig.5.